# FASCICULE DE BREVET EUROPEEN

(11) **EP 2 081 829 B1**
(45) Date de publication et mention de la délivrance du brevet: **01.09.2010**
(21) Numéro de dépôt: 07858499.2
(22) Date de dépôt: 03.10.2007
(51) Int. Cl.: B64G 1/28

(54) **GYRODYNE ET SON DISPOSITIF DE MONTAGE**
STEUERMOMENTKREISEL UND VORRICHTUNG ZU SEINER MONTAGE
GYRODYNE AND DEVICE FOR ASSEMBLY THEREOF

(30) Priorité: 23.10.2006 FR 0609278
(43) Date de publication de la demande: 29.07.2009
(73) Titulaire: Astrium SAS, 75016 Paris (FR)
(72) Inventeur: FAUCHEUX, Philippe, 31150 Gagnac Sur Garonne (FR); CHUPIN, Stéphane, 31320 Auzeville-Tolosane (FR)
(74) Mandataire: Cabinet Plasseraud
(86) Numéro de dépôt international: PCT/FR2007/052066
(87) Numéro de publication internationale: WO 2008/050019

(56) Documents cités:
- EP-A- 0 848 186
- WO-A-02/10015
- WO-A-03/080439
- US-A- 3 452 948
- US-A- 5 820 079
- US-A- 6 135 392
- US-B1- 6 305 647

## Description

La présente invention concerne un actionneur en couple à effet gyroscopique, encore appelé gyrodyne, et son dispositif de montage sur une structure porteuse.

Nous nous intéressons aux gyrodynes constitués d'une roue d'inertie (encore appelée roue cinétique) montée sur un dispositif de mise en rotation suivant un axe, dispositif appelé parfois « cardan » même s'il n'existe qu'un seul axe de rotation. La roue d'inertie comporte une toupie qui est mise en rotation et maintenue à vitesse sensiblement constante par des moyens appropriés, de sorte à créer un moment cinétique de nonne sensiblement constante. La roue est fixée rigidement sur la partie mobile (le rotor) du cardan par l'intermédiaire d'une pièce structurale que nous appellerons « support de roue ». La partie fixe du cardan (couramment appelée stator) est destinée à être fixée sur une structure porteuse. La mise en rotation du rotor par rapport au stator du cardan s'effectue par des moyens appropriés (roulements, moteur, etc), de telle sorte que le rotor tourne autour d'un axe fixe, appelé axe cardan, par rapport au stator. La disposition de la roue, du support de roue et de l'ensemble cardan est telle que l'angle entre l'axe cardan et le moment cinétique de la roue est constant, toujours non nul, et dans la plupart des cas égal à 90°. La rotation du rotor du cardan permet de faire pivoter le moment cinétique de la roue, créant ainsi un couple gyroscopique sur la structure porteuse égal au produit vectoriel du vecteur vitesse instantanée de rotation du rotor du cardan et du vecteur moment cinétique de la roue.

L'alimentation électrique des capteurs et moteurs nécessaires au fonctionnement du gyrodyne, ainsi que les asservissements de l'orientation de l'axe cardan, et de la vitesse de la toupie s'effectuent à l'aide d'une électronique de commande qui, suivant l'état de l'art, est partiellement ou totalement déportée et non intégrée en sa totalité à la partie mécanique du gyrodyne. L'électronique et les éléments électriques du gyrodyne sont alors reliés à l'aide de câbles électriques pouvant mesurer jusqu'à quelques mètres de longueur. D'autre part, du fait de radiations intenses baignant le milieu dans lequel évolue généralement le satellite, ces électroniques doivent être protégées par des boîtiers le plus souvent en aluminium, dont l'épaisseur doit être suffisante pour atténuer les effets néfastes desdites radiations.

D'autre part, un autre élément à prendre en compte est le fait que la roue cinétique n'est pas idéalement équilibrée. Le gyrodyne en fonctionnement va créer des micro-vibrations indésirables qui vont être transmises par l'intermédiaire de la structure porteuse à des éléments éventuellement sensibles de charges utiles, comme par exemple des détecteurs optiques, et vont perturber leur fonctionnement.

Les gyrodynes trouvent une application importante dans les systèmes de commandes d'attitude et d'orientation, en particulier dans les systèmes de pointage de satellites, cf. WO 03/080 439. En effet, il s'agit d'un équipement permettant de délivrer des couples importants nécessaires, notamment au basculement rapide de la ligne de visée d'instruments embarqués sur satellites.

De manière usuelle, on utilise une grappe de gyrodynes comportant au moins trois gyrodynes pour permettre de réorienter un trièdre de référence lié au satellite dans toutes les attitudes, et dans certains autres cas, une grappe de gyrodynes comportant au moins deux gyrodynes pour un basculement suivant deux axes. Le plus souvent, on utilise au moins quatre gyrodynes en grappe afin d'assurer une redondance et de simplifier la gestion de l'évitement des singularités. Un exemple de réalisation d'un procédé et d'un dispositif de pilotage de l'attitude d'un satellite à l'aide d'une grappe de gyrodynes est décrit dans le document FR 2 786 283 ou dans le document FR 2 826 470.

Afin de pouvoir créer des couples dans toutes les directions, une grappe de quatre gyrodynes est le plus souvent disposée, suivant l'état de l'art, de telle sorte que les axes cardan des quatre gyrodynes soient perpendiculaires respectivement aux quatre faces d'une pyramide le plus souvent régulière (configuration dite pyramidale). D'autres configurations existent pour lesquelles la disposition des gyrodynes est différente de celle-ci, mais dans tous les cas, il est nécessaire pour pouvoir créer efficacement des couples suivant toutes les directions que les gyrodynes, en nombre au moins égal à trois, n'aient pas leurs axes cardan tous alignés suivant une direction unique. Il faut au moins deux inclinaisons différentes pour l'ensemble des axes cardan de la grappe.

Le problème se pose alors d'installer cette grappe de gyrodynes dans le satellite. A titre illustratif, nous pouvons considérer qu'il s'agit de placer une grappe de quatre gyrodynes sur un plan de pose constitué par la structure porteuse du satellite, par exemple un des murs du satellite, de façon à respecter la géométrie désirée de la grappe, par exemple, en faisant en sorte que les axes cardan des gyrodynes soient perpendiculaires respectivement aux quatre faces d'une pyramide régulière d'angle au sommet spécifié par l'utilisateur.

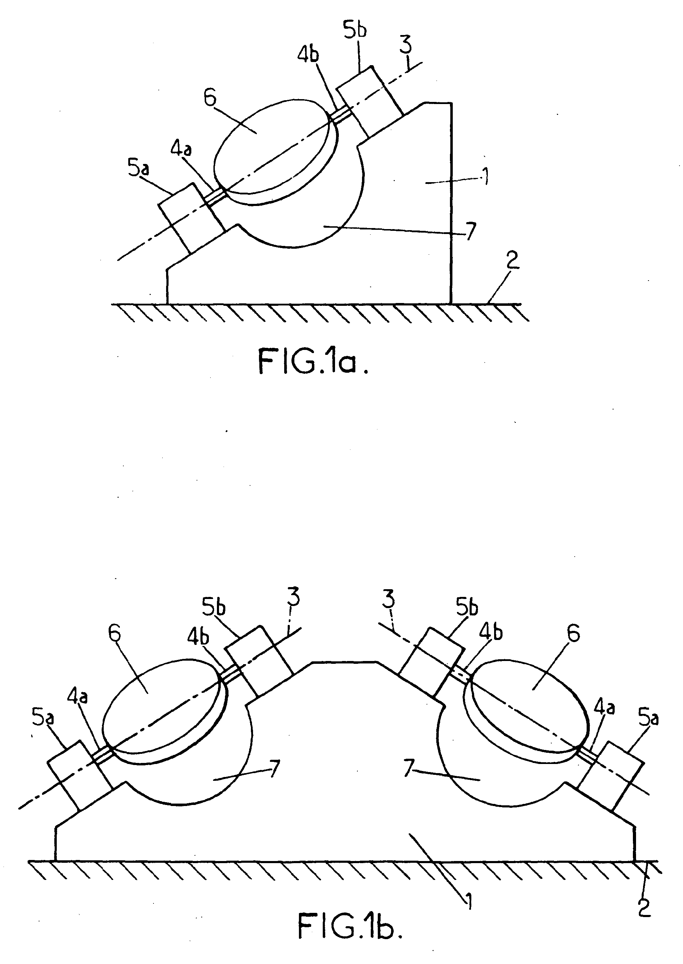

Suivant l'état de l'art, que l'on retrouve par exemple dans la publication «Practical Results on the development of a Control Moment Gyro based Attitude Control System for Agile Small Satellites », V.J. Lappas, W.H. Steyn, C.I. Underwood, effectuée lors de l'événement « The Sixteenth Annual AIAA/USU Conférence on Small Satellites, August 12-15, 2002, Logan, Utah, USA », chaque gyrodyne est fixé suivant le schéma illustratif de la figure 1a sur une structure intermédiaire 1 elle-même fixée sur ledit plan de pose 2, de telle sorte que l'axe cardan 3 est incliné par rapport au plan de pose 2, le rotor 4a, 4b du cardan est en deux parties disjointes et reprend la roue 6 de part et d'autre en deux points opposés, les deux parties du stator 5a, 5b du cardan sont fixées sur la structure intermédiaire 1 de part et d'autre de la roue 6, ou sont intégrées à ladite structure intermédiaire 1, et la structure intermédiaire présente un évidement 7 qui permet à la roue de tourner de 360° sur son support. La géométrie de la structure intermédiaire, que l'on qualifiera schématiquement de structure en berceau, est telle que l'axe cardan du gyrodyne est incliné par rapport au plan de pose, suivant un angle désiré.

A partir de cette configuration, il existe des variantes suivant l'état de l'art, selon lesquelles soit les structures intermédiaires des gyrodynes sont montées indépendamment sur le plan de pose, soit au contraire elles forment une structure unique de type par exemple pyramidal sur laquelle sont fixés tous les gyrodynes de la grappe selon le principe indiqué ci-dessus. Cette alternative est représentée schématiquement en coupe sur la figure 1 b.

Ces montages suivant l'état de l'art présentent certaines limitations. Tout d'abord, l'encombrement et la masse du dispositif de montage sont importants, du fait que le cardan reprend la roue des deux côtés, ce qui augmente la taille et la masse de la structure intermédiaire pour une dimension et une masse de roue donnée. Cette structure intermédiaire est d'autant plus complexe qu'elle doit être évidée pour laisser passer la roue lorsque celle-ci tourne de 360°. Elle doit donc avoir une forme dite en berceau qui entoure la roue et reprend les axes cardan de part et d'autre de la roue, tout en fixant l'ensemble du gyrodyne sur le plan de pose en inclinant l'axe cardan du gyrodyne suivant l'angle désiré. La masse et la complexité de cette structure intermédiaire sera d'autant plus importante que l'ensemble du dispositif doit être dimensionné pour subir des environnements dynamiques très défavorables sans déformation ni dommage, notamment lors de la phase de lancement du satellite pendant laquelle l'ensemble du dispositif subit des accélérations statiques allant jusqu'à plusieurs g, des vibrations de typiquement 20-100g dans la gamme 10-100 Hz et des chocs de typiquement 1000g dans la gamme 100-1000Hz (chocs).

Dans ce dispositif suivant l'état de l'art, une façon de limiter la masse et l'encombrement des structures porteuses des gyrodynes est de les assembler en une seule pièce structurale sur laquelle est monté l'ensemble de la grappe. Néanmoins, dans ce cas, une autre limitation apparaît qui est l'absence de modularité du dispositif, celui-ci devant être monté en bloc sur la structure porteuse du satellite, sans possibilité d'installer individuellement chacun des gyrodynes en différents endroits du satellite. On comprend les difficultés d'aménagement de cet ensemble solidaire de gyrodynes à bord d'un satellite dont la forme générale est en général parallélépipédique, chaque mur du satellite étant encombré d'équipements (électroniques, propulsion, éléments de charges utiles, etc).

Ainsi, le dispositif de montage de gyrodynes suivant l'invention a pour but de permettre la réalisation modulaire de grappes de gyrodynes de petite taille, compactes et à encombrement minimum par rapport aux moments cinétiques et aux couples délivrés.

L'invention s'applique plus particulièrement au contrôle d'attitude de petits satellites, d'une masse typiquement comprise entre 100 et 500 kg, pour lesquels il est important de minimiser l'encombrement et la masse de l'ensemble constitué par la partie mécanique du gyrodyne, par la pièce d'interface de cette partie mécanique avec la structure porteuse du satellite, par l'électronique de contrôle, ainsi que par les dispositifs d'isolation et d'atténuation éventuellement nécessaires à la réduction des vibrations induites par le gyrodyne sur la structure porteuse. Néanmoins, l'invention est avantageuse également pour des gyrodynes de plus grande dimension destinés à être intégrés dans des satellites, et plus généralement des engins spatiaux comme des stations spatiales, ou tout autre grand système spatial dont la masse peut aller jusqu'à plusieurs tonnes.

Un des objets de l'invention a également pour but de permettre la réalisation d'un gyrodyne permettant d'empêcher la propagation des micro-vibrations transmises par la roue d'inertie au satellite.

Afin de réduire la masse et l'encombrement d'un gyrodyne et de son dispositif de montage sur une structure porteuse de satellite, la présente invention a pour objet un gyrodyne comprenant une roue d'inertie montée, par l'intermédiaire d'un support de roue, sur la partie mobile ou rotor d'un ensemble cardan comprenant également un stator et des moyens de mise en rotation du rotor par rapport au stator autour d'un premier axe de rotation, la toupie de ladite roue d'inertie pouvant être mise en rotation autour d'un second axe de rotation non aligné avec ledit premier axe de rotation, le stator du cardan étant monté sur une cale et fixé sur la cale par l'intermédiaire de moyens d'atténuation de vibrations et les moyens de mise en rotation du rotor étant au moins partiellement logés dans le volume intérieur de la cale.

Il est ainsi obtenu un gyrodyne et son dispositif de montage de volume et de masse moindre par rapport à l'art antérieur et permettant d'atténuer les micro-vibrations transmises par la roue d'inertie au satellite.

De manière avantageuse, le premier axe de rotation est incliné par rapport à la base inférieurs de la cale.

Avantageusement, le stator du cardan est monté sur une cale dont la base inférieure est planaire, la cale ayant une face supérieure inclinée par rapport à la base planaire.

Selon une variante de l'invention, le stator du cardan est vissé sur la cale par l'intermédiaire des moyens d'atténuation de vibrations.

De manière avantageuse, l'angle d'inclinaison entre l'axe de rotation du rotor par rapport au stator du cardan et la normale à la base planaire est inférieur à 60°, et préférentiellement est sensiblement égal à 30°.

Afin de minimiser le volume et la masse induits par le câblage, les moyens électroniques de commande du gyrodyne sont logés dans le volume intérieur de la cale.

Toujours afin d'améliorer la compacité du gyrodyne, la cale présente un orifice dans lequel sont aptes à s'engager les moyens de mise en rotation du rotor par rapport au stator du cardan.

Selon un mode de réalisation avantageux, l'orifice est prévu dans la face supérieure de la cale.

Afin de minimiser les micro-vibrations transmises par la roue d'inertie au satellite, le stator du cardan est fixé sur la face supérieure de la cale par les moyens d'atténuation de vibrations.

Toujours afin d'améliorer l'effet d'atténuation des micro-vibrations, les moyens d'atténuation de vibrations sont répartis sur la périphérie du stator du cardan.

Selon un mode de réalisation avantageux, les moyens d'atténuation de vibrations comportent au moins une pièce fixée sur la cale et au moins une autre pièce fixée sur le stator du cardan.

Afin d'atténuer efficacement les vibrations, au moins une pièce fixée sur ladite cale est reliée à au moins une autre pièce fixée sur ledit stator du cardan par l'intermédiaire d'au moins un plot en élastomère.

Afin d'atténuer efficacement les vibrations, les points de fixation du stator du cardan sur les moyens d'atténuation de vibrations sont situés approximativement dans un même plan, et le centre de gravité de l'ensemble constitué par la roue, le support de roue, le stator du cardan et les moyens de rotation est éloigné dudit plan d'au plus quelques centimètres.

Afin de permettre la fixation directe du gyrodyne sur la structure du satellite, la base planaire présente des moyens de fixation, préférentiellement sur une plate-forme d'un satellite ou d'un engin spatial.

La présente invention a également pour objet un engin spatial caractérisé en ce qu'au moins un gyrodyne selon l'invention est utilisé pour le contrôle de son attitude.

Avantageusement, au moins deux gyrodynes selon l'invention sont utilisés pour le contrôle de son attitude, et les cales d'au moins deux gyrodynes sont fixées l'une à l'autre par des moyens de fixation appropriés, ou sont réunies en une structure unique.

La présente invention est maintenant décrite à l'aide d'un exemple uniquement illustratif et nullement limitatif de la portée de la présente invention et à partir des illustrations suivantes, dans lesquelles :
- la figure 1a, déjà mentionnée, est une vue en coupe par l'axe du cardan d'un gyrodyne et de son dispositif de montage de type connu ;
- la figure 1b, déjà mentionnée, est une vue en coupe d'une grappe de gyrodynes et de son dispositif de montage de type connu ;
- la figure 2 représente une vue en perspective éclatée d'un gyrodyne selon l'invention,
- la figure 3 représente une vue en coupe schématique simplifiée du gyrodyne selon l'invention ;
- les figures 4a et 4b représentent différentes variantes de montage du gyrodyne sur son support ;
- la figure 5 représente une intégration possible de plusieurs dispositifs de montage suivant l'invention.

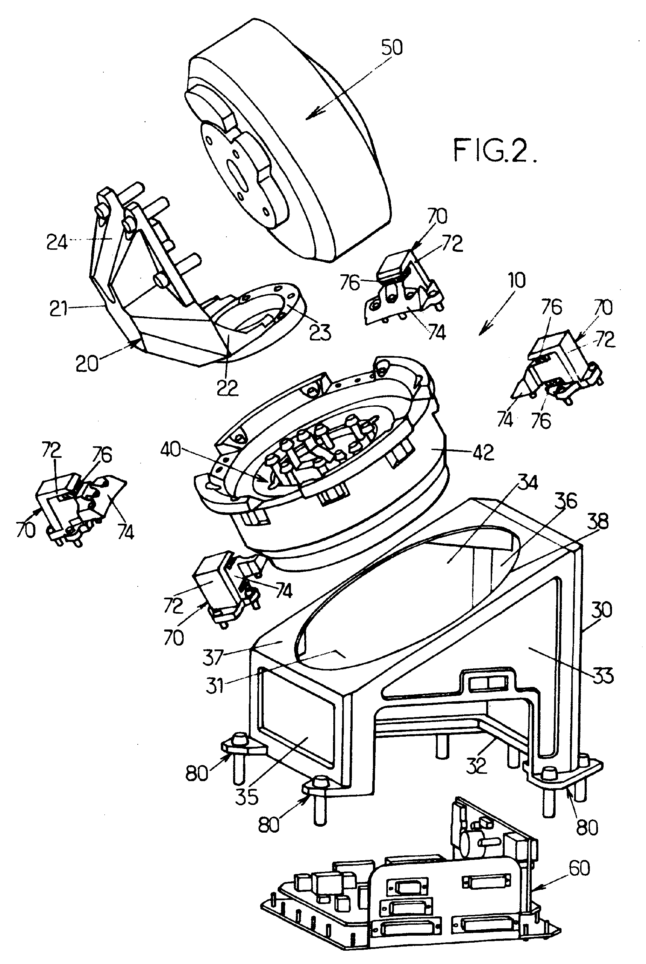

Il est représenté sur la figure 2 en vue éclatée un gyrodyne 10 comprenant une roue d'inertie 50 montée, par l'intermédiaire d'un support de roue 20, sur la partie mobile 40 d'un ensemble comprenant un rotor (c'est-à-dire ladite partie mobile 40), un stator 42 et des moyens de mise en rotation du rotor par rapport au stator autour d'un premier axe de rotation, la toupie de ladite roue d'inertie 50 pouvant être mise en rotation autour d'un second axe de rotation non aligné avec ledit premier axe de rotation, caractérisé en ce que ledit stator 42 est monté sur une cale 30 dont la base inférieure 32 est planaire, ledit premier axe de rotation est incliné par rapport à ladite base inférieure 32, et lesdits moyens de mise en rotation dudit rotor 40 sont au moins partiellement logés dans le volume intérieur 31 de ladite cale 30.

La roue d'inertie 50 peut avoir une constitution de type connu. Par exemple, elle comporte un carter étanche et une toupie. Le carter est muni d'une plaque de support qui porte les roulements sur lesquels tourne la toupie, le stator du moteur d'entraînement de la toupie et un tachymètre. Il ne sera pas décrit de manière détaillée la constitution interne de la roue car elle peut être de type connu.

De manière générale, la toupie est entraînée en rotation à une vitesse élevée, généralement constante. Le moteur d'entraînement comporte, par exemple, un moteur couple sans balais et sans fer, généralement à commutation électronique, dont le couple compense les dissipations d'énergie par frottement.

Par ailleurs, selon l'invention, le cardan est constitué d'une partie mobile, le rotor 40. d'une partie fixe, le stator 42, et des moyens de mise en rotation du rotor 40 par rapport au stator 42, moyens qui ne sont pas représentés sur la figure.

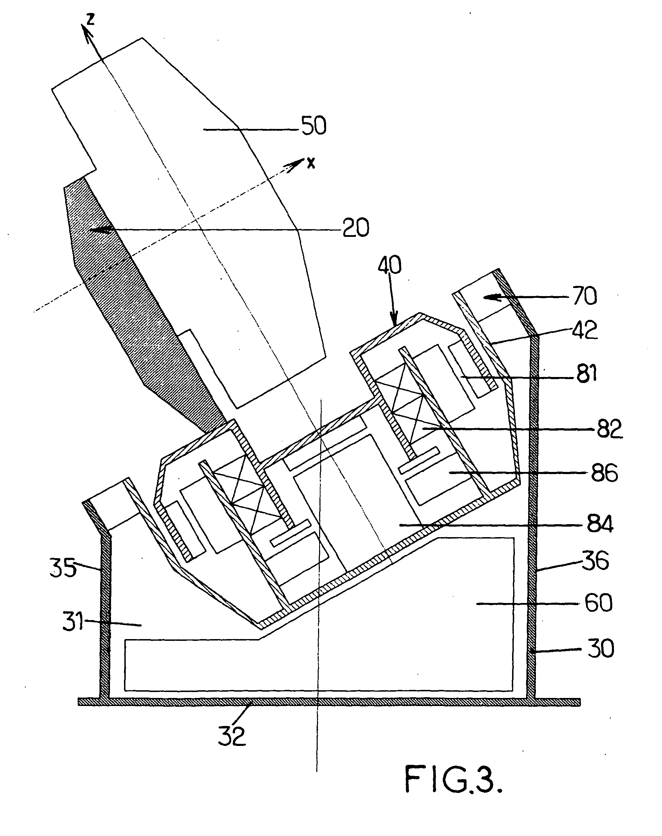

Lesdits moyens de rotation du rotor par rapport au stator du cardan incluent généralement un moteur, avantageusement du type moteur couple sans balai, ainsi qu'un codeur angulaire 86 (voir figure 3) et par exemple un collecteur de puissance à balai permettant de faire passer la puissance électrique devant alimenter la roue à travers le cardan.

Une cale 30 est réalisée de manière telle qu'elle définit un volume intérieur 31 dans lequel les moyens de rotation du rotor 40 du cardan sont au moins partiellement logés. Parfois, mais non nécessairement, le stator 42 du cardan est également au moins partiellement logé dans le volume intérieur 31 de la cale 30.

Selon une forme de réalisation préférentielle de la cale 30, celle-ci comprend :
- une base 32 inférieure planaire, partiellement évidée, dans laquelle est apte à s'engager et à s'insérer la partie électronique 60 de commande des moteurs du cardan et de la roue 50 ainsi que l'ensemble des moyens d'interface entre le gyrodyne 10 et le satellite ou engin spatial, la base inférieure 32 définissant un plan horizontal avec des moyens de fixation 80 du gyrodyne 10 sur la plate-forme ou le corps de l'engin spatial ou du satellite;
- quatre parois latérales 33-36, à savoir deux parois trapézoïdales 33, 34 parallèles entre elles et deux parois rectangulaires 35, 36 parallèles entre elles, une des deux parois rectangulaires 36 étant de hauteur plus grande que l'autre paroi rectangulaire 35 ;
- une face supérieure 37 reliant les bords supérieurs des quatre parois latérales 33-36, la face supérieure 37, opposée à la base inférieure planaire 32, présentant un angle d'inclinaison par rapport à la base planaire 32, la face supérieure 37 présentant un orifice central 38 dans lequel est apte à s'engager, s'insérer et se fixer, au moins partiellement, les moyens de rotation du rotor 40 du cardan

Il est également prévu d'intégrer dans le volume intérieur 31 de la cale 30 les moyens d'interface de commande entre le satellite ou engin spatial et le gyrodyne 10 ainsi que les moyens électroniques 60 permettant la commande des moyens de rotation du rotor 40 du cardan.

La structure support 20 de roue 50 se présente plus précisément sous la forme d'un flasque 21 dont la partie terminale 22 est fixée au rotor 40 et la partie la moins large 24 porte la partie non tournante de la roue 50.

La partie terminale 22 de la structure support 20 de roue 50 comprend un anneau 23 apte à être entraîné en rotation par les moyens de rotation du rotor 40.

Afin de réduire les micro-vibrations engendrées par la rotation de la masse d'inertie de la roue 50 et qui sont transmises aux équipements du satellite dont les performances peuvent être de ce fait réduites, il est prévu de placer des atténuateurs ou isolateurs de vibrations 70 sous forme de dispositifs modulaires d'isolation multi-axes de vibrations et de chocs, à base d'élastomère sur le pourtour du stator 42 du cardan. De tels dispositifs modulaires d'isolation, notamment décrits dans la demande de brevet FR 05 13083, sont aptes à atténuer les micro-vibrations transmises par le gyrodyne 10 à la structure porteuse lors du fonctionnement en orbite, et inversement les vibrations et les chocs transmis par la structure porteuse au gyrodyne, en particulier lors du lancement du satellite.

Toutefois, selon un mode de réalisation particulier, ces dispositifs d'isolation multi-axes 70 d'au moins un équipement générateur de vibrations (par exemple une roue d'inertie 50) se caractérisent en ce qu'ils comprennent une pluralité de modules d'isolation comportant chacun deux pièces rigides dont l'une, dite pièce externe 72, est destinée à être fixée à la structure porteuse, à savoir la cale 30, et l'autre, dite pièce interne 74, est destinée à être fixée à l'équipement vibrant ou à un support de ce dernier, à savoir le stator 42 du cardan. Les pièces interne et externe 72, 74 sont reliées l'une à l'autre par des moyens d'amortissement, par exemple par au moins un plot d'isolation 76, préférentiellement en élastomère, atténuant par sa déformation suivant au moins un de ses axes de traction, compression ou cisaillement, la transmission de vibrations de faible amplitude générées par l'équipement générateur de vibrations.

Des moyens de fixation, sous la forme d'une pluralité d'orifices 75, sont également prévus sur la face supérieure 37 de la cale 30 permettant la fixation des moyens d'atténuation et d'isolation 70 des vibrations, et plus précisément pour la fixation de la pièce externe 72 des moyens d'atténuation et d'isolation 70 sur la cale 30.

Ainsi, les moyens de rotation du rotor 40 du cardan, ainsi que le stator 42 du cardan, sont supportés dans l'orifice 38 de la face supérieure 37 par les moyens d'atténuation et d'isolation 70 aptes à atténuer et isoler les vibrations et les chocs, notamment lors de la mise en rotation de la roue d'inertie 50.

Les moyens d'atténuation et d'isolation 70 des vibrations sont préférentiellement répartis sur la périphérie du stator 42 du cardan, par exemple sous la forme de quatre modules d'isolation tels que précédemment décrits et répartis sur quatre points équidistants d'un même cercle, préférentiellement aux quatre coins de la face supérieure 37.

Le degré d'inclinaison de la face supérieure 37 de la cale 30 par rapport au plan de la base inférieure 32 permet de déterminer l'angle d'orientation du gyrodyne 10. Avantageusement, l'angle d'inclinaison entre la base inférieure planaire 32 et la face supérieure 37 est compris entre 0 et 60°, et préférentiellement est sensiblement égal à 30°.

Par ailleurs, l'électronique 60 intégrée minimise de manière conséquente le volume et la masse induites par le câblage.

Les micro-vibrations sont également minimisées avec les moyens d'atténuation 70 intégrés qui sont d'autant plus efficaces du fait de la proximité des moyens d'atténuation 70 et de la source des vibrations engendrées par la roue 50 tournant à grande vitesse.

La figure 3 représente une vue en coupe schématique simplifiée du mode de réalisation du gyrodyne 10 selon l'invention où il peut être remarqué la présence de moyens moteurs 81 aptes à entraîner la rotation du rotor 40 du cardan.

Des paliers de roulements 82 sont prévus entre le stator 42 et le rotor 40 du cardan.

Un passage central 84 est prévu pour le passage de signaux ainsi qu'un capteur de position 86 apte à mesurer l'angle de rotation de la partie mobile du cardan, à savoir l'angle de rotation du rotor 40 du cardan.

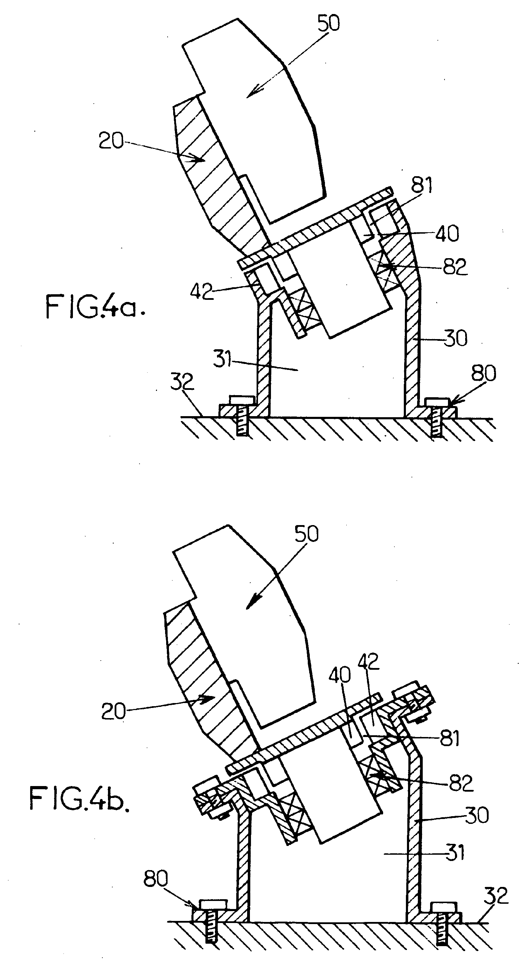

La figure 4 présente très schématiquement deux autres types de montages du stator du cardan sur la cale. Dans la figure 4a, le stator 42 et la cale 30 sont d'une seule pièce. Dans la figure 4b, le stator 42 est vissé sur la cale 30.

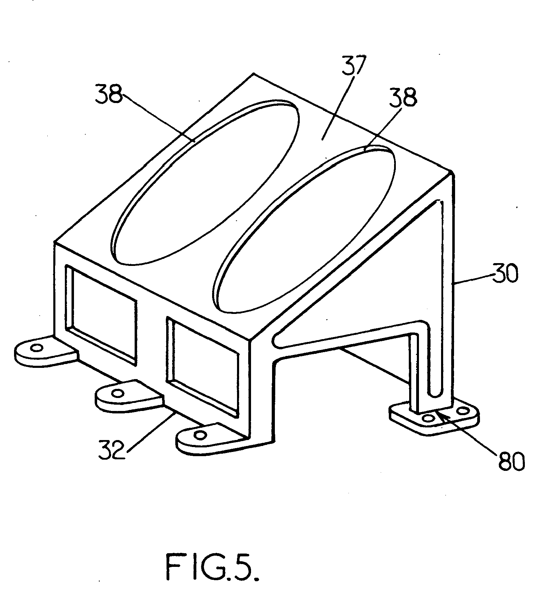

La figure 5 présente un dispositif selon l'invention où plusieurs cales 30 sont intégrées les unes aux autres pour former une structure unique permettant d'intégrer plusieurs gyrodynes du type de l'invention.

En conclusion, outre le fait que l'invention permet d'obtenir un gyrodyne et son dispositif de fixation plus compact, à volume réduit et permettant d'atténuer la propagation des micro-vibrations de la roue d'inertie au satellite, il est également plus facile de remplacer les gyrodynes selon l'invention de manière indépendante car chaque gyrodyne est indépendant et ne dépend plus du câblage apporté par le satellite qui relie le mécanisme et l'électronique. De plus, la cale 30 joue également un rôle de protection de l'électronique 60 de commande à l'encontre des radiations.

## Revendications

1. Gyrodyne (10) comprenant une roue d'inertie (50) montée, par l'intermédiaire d'un support de roue (20), sur la partie mobile ou rotor (40) d'un ensemble cardan comprenant également un stator (42) et des moyens de mise en rotation du rotor (40) par rapport au stator (42) autour d'un premier axe de rotation, la toupie de ladite roue d'inertie (50) pouvant être mise en rotation autour d'un second axe de rotation non aligné avec ledit premier axe de rotation lesdits moyens de mise en rotation dudit rotor (40) étant au moins partiellement logés dans le volume intérieur (31) d'une cale (30), **caractérisé en ce que** ledit stator (42) dudit cardan est monté sur ladite cale (30) et fixé sur ladite cale (30) par l'intermédiaire de moyens d'atténuation de vibrations (70).

2. Gyrodyne selon la revendication 1, **caractérisé en ce que** ledit premier axe de rotation est incliné par rapport à une base inférieure (32) de ladite cale (30).

3. Gyrodyne selon la revendication 1 ou la revendication 2, **caractérisé en ce que** ledit stator (42) dudit cardan est monté sur une cale (30) dont la base inférieure (32) est planaire et **en ce que** ladite cale (30) a une face supérieure (37) inclinée par rapport à la base planaire (32).

4. Gyrodyne selon l'une quelconque des revendications 1 à 3, **caractérisé en ce que** ledit stator (42) dudit cardan est vissé sur ladite cale (30) par l'intermédiaire desdits moyens d'atténuation de vibrations (70).

5. Gyrodyne selon l'une quelconque des revendications précédentes, **caractérisé en ce que** l'angle d'inclinaison entre l'axe de rotation du rotor par rapport au stator (42) dudit cardan et la normale à ladite base planaire (32) est inférieur à 60°, et préférentiellement est sensiblement égal à 30°.

6. Gyrodyne selon l'une quelconque des revendications précédentes, **caractérisé en ce que** des moyens électroniques (60) de commande dudit gyrodyne sont logés dans ledit volume intérieur (31) de ladite cale (30).

7. Gyrodyne selon l'une quelconque des revendications précédentes, **caractérisé en ce que** ladite cale (30) présente un orifice (38) dans lequel sont aptes à s'engager lesdits moyens de mise en rotation du rotor (40) par rapport audit stator (42) dudit cardan.

8. Gyrodyne selon la revendication précédente, **caractérisé en ce que** ledit orifice (38) est prévu dans une face supérieure (37) de ladite cale (30).

9. Gyrodyne selon l'une quelconque des revendications 3 à 8, **caractérisé en ce que** ledit stator (42) dudit cardan est fixé sur une face supérieure (37) de ladite cale (30) par lesdits moyens d'atténuation de vibrations (70).

10. Gyrodyne selon l'une quelconque des revendications précédentes, **caractérisé en ce que** lesdits moyens d'atténuation de vibrations (70) sont répartis sur la périphérie dudit stator (42) dudit cardan.

11. Gyrodyne selon l'une quelconque des revendications précédentes, **caractérisé en ce que** lesdits moyens d'atténuation de vibrations (70) comportent au moins une pièce (72) fixée sur ladite cale (30) et au moins une autre pièce (74) fixée sur ledit stator (42) dudit cardan.

12. Gyrodyne selon la revendication 11, **caractérisé en ce qu'**au moins une pièce (72) fixée sur ladite cale (30) est reliée à au moins une autre pièce (74) fixée sur ledit stator (42) dudit cardan par l'intermédiaire d'au moins un plot (76) en élastomère.

13. Gyrodyne selon l'une quelconque des revendications précédentes, **caractérisé en ce que** les points de fixation dudit stator (42) dudit cardan sur lesdits moyens d'atténuation de vibrations (70) sont situés approximativement dans un même plan, et le centre de gravité de l'ensemble constitué par la roue (50), le support de roue (20), le stator (42) et les moyens de rotation du rotor (40) est éloigné dudit plan d'au plus quelques centimètres.

14. Gyrodyne selon l'une quelconque des revendications précédentes, **caractérisé en ce qu'**une base planaire (32) présente des moyens de fixation (80), préférentiellement sur une plate-forme d'un satellite ou d'un engin spatial.

15. Engin spatial **caractérisé en ce qu'**au moins un gyrodyne selon l'une des revendications 1 à 14 est utilisé pour le contrôle de son attitude.

16. Engin spatial selon la revendication 15, **caractérisé en ce qu'**au moins deux gyrodynes selon l'une quelconque des revendications 1 à 14 sont utilisés pour le contrôle de son attitude, et les cales d'au moins deux gyrodynes sont fixées l'une à l'autre par des moyens.

## Claims

1. A control moment gyro (10) comprising an inertia wheel (50) mounted, by means of a wheel support (20), on the movable portion or rotor (40) of a gimbal assembly also comprising a stator (42) and means for rotating the rotor (40) relative to the stator (42) about a first axis of rotation, the spinner of said inertia wheel (50) being able to be rotated about a second axis of rotation not aligned with said first axis of rotation, said means for rotating said rotor (40) being at least partially housed in the internal volume (31) of one chock (30), **characterized in that** said stator (42) of said gimbal is mounted on said chock (30) and attached to said chock (30) by vibration-attenuation means (70).

2. The control moment gyro as claimed in claim 1, **characterized in that** said first axis of rotation is inclined relative to a lower base (32) of said chock (30).

3. The control moment gyro as claimed in claim 1 or claim 2, **characterized in that** said stator (42) of said gimbal is mounted on a chock (30) the lower base (32) of which is planar and **in that** said chock (30) has an upper face (37) inclined relative to the planar base (32).

4. The control moment gyro as claimed in any one of claims 1 to 3, **characterized in that** said stator (42) of said gimbal is screwed onto said chock (30) by said vibration-attenuation means (70).

5. The control moment gyro as claimed in any one of the preceding claims, **characterized in that** the angle of inclination between the axis of rotation of the rotor relative to the stator (42) of said gimbal and the normal to said planar base (32) is less than 60°, and preferably is substantially equal to 30°.

6. The control moment gyro as claimed in any one of the preceding claims, **characterized in that** electronic means (60) for controlling said control moment gyro are housed in said internal volume (31) of said chock (30).

7. The control moment gyro as claimed in any one of the preceding claims, **characterized in that** said chock (30) has an orifice (38) in which said means of rotating the rotor (40) relative to said stator (42) of said gimbal are capable of being engaged.

8. The control moment gyro as claimed in the preceding claim, **characterized in that** said orifice (38) is provided in an upper face (37) of said chock (30).

9. The control moment gyro as claimed in any one of claims 3 to 8, **characterized in that** said stator (42) of said gimbal is attached to an upper face (37) of said chock (30) by said vibration-attenuation means (70).

10. The control moment gyro as claimed in any one of the preceding claims, **characterized in that** said vibration-attenuation means (70) are distributed over the periphery of said stator (42) of said gimbal.

11. The control moment gyro as claimed in any one of the preceding claims, **characterized in that** said vibration-attenuation means (70) comprise at least one part (72) attached to said chock (30) and at least one other part (74) attached to said stator (42) of said gimbal.

12. The control moment gyro as claimed in claim 11, **characterized in that** at least one part (72) attached to said chock (30) is connected to at least one other part (74) attached to said stator (42) of said gimbal by at least one elastomer mounting block (76).

13. The control moment gyro as claimed in any one of the preceding claims, **characterized in that** the points for attaching said stator (42) of said gimbal to said vibration-attenuation means (70) are situated approximately in one and the same plane, and the center of gravity of the assembly consisting of the wheel (50), the wheel support (20), the stator (42) and the means for rotating the rotor (40) is separated from said plane by at most a few centimeters.

14. The control moment gyro as claimed in any one of the preceding claims, **characterized in that** a planar base (32) has means (80) for attachment preferably to a platform of a satellite or of a spacecraft.

15. A spacecraft **characterized in that** at least one control moment gyro as claimed in one of claims 1 to 14 is used for controlling its attitude.

16. The spacecraft as claimed in claim 15, **characterized in that** at least two control moment gyros as claimed in any one of claims 1 to 14 are used for controlling its attitude, and the chocks of at least two control moment gyros are attached to one another by means.

## Patentansprüche

1. Gyrodyne-Vorrichtung (10), umfassend ein Trägheitsrad (50), das unter Vermittlung eines Radhalters (20) auf dem mobilen Abschnitt oder Rotorabschnitt (40) eines Kardan-Aufbaus angeordnet ist, welcher auch einen Stator (42) und Mittel, um den Rotor (40) in Bezug auf den Stator (42) um eine erste Rotationsachse in Drehung zu versetzen, umfasst, wobei der Kreisel des Trägheitsrades (50) um eine zweite Rotationsachse in Drehung versetzt werden kann, die nicht mit der ersten Rotationsachse ausgerichtet ist, wobei die Mittel, um den Rotor (40) in Drehung zu versetzen, wenigstens teilweise in dem Innenvolumen (31) eines Keils (30) untergebracht sind,
**dadurch gekennzeichnet, dass** der Stator (42) des Kardans auf dem Keil (30) angeordnet und auf dem Keil (30) unter Vermittlung von Vibrationsdämpfungsmitteln (70) befestigt ist.

2. Gyrodyne-Vorrichtung nach Anspruch 1, **dadurch gekennzeichnet, dass** die erste Rotationsachse in Bezug auf eine untere Basis (32) des Keils (30) geneigt ist.

3. Gyrodyne-Vorrichtung nach Anspruch 1 oder 2, **dadurch gekennzeichnet, dass** der Stator (42) des Kardans auf einem Keil (30) angeordnet ist, dessen untere Basis (32) eben ist und dass der Keil (30) eine obere Fläche (37) aufweist, die in Bezug auf die ebene Basis (32) geneigt ist.

4. Gyrodyne-Vorrichtung nach einem der Ansprüche 1 bis 3, **dadurch gekennzeichnet, dass** der Stator (42) des Kardans unter Vermittlung der Vibrationsdämpfungsmittel (70) auf den Keil (30) geschraubt ist.

5. Gyrodyne-Vorrichtung nach einem der vorhergehenden Ansprüche, **dadurch gekennzeichnet, dass** der Neigungswinkel zwischen der Rotationsachse des Rotors in Bezug auf den Stator (42) des Kardans und der Senkrechten zu der ebenen Basis (32) kleiner als 60° ist, und vorzugsweise im Wesentlichen gleich 30° ist.

6. Gyrodyne-Vorrichtung nach einem der vorhergehenden Ansprüche, **dadurch gekennzeichnet, dass** elektronische Regelungs-/Steuerungsmittel (60) der Gyrodyne-Vorrichtung in dem Innenvolumen (31) des Keils (30) untergebracht sind.

7. Gyrodyne-Vorrichtung nach einem der vorhergehenden Ansprüche, **dadurch gekennzeichnet, dass** der Keil (30) eine Öffnung (38) aufweist, in der die Mittel, um den Rotor (40) in Bezug auf den Stator (42) des Kardans in Drehung zu versetzen, eingriffsfähig ausgebildet sind.

8. Gyrodyne-Vorrichtung nach dem vorhergehenden Anspruch, **dadurch gekennzeichnet, dass** die Öffnung (38) in einer oberen Fläche (37) des Keils (30) vorgesehen ist.

9. Gyrodyne-Vorrichtung nach einem der Ansprüche 3 bis 8, **dadurch gekennzeichnet, dass** der Stator (42) des Kardans auf einer oberen Fläche (37) des Keils (30) durch die Vibrationsdämpfungsmittel (70) befestigt ist.

10. Gyrodyne-Vorrichtung nach einem der vorhergehenden Ansprüche, **dadurch gekennzeichnet, dass** die Vibrationsdämpfungsmittel (70) auf dem Rand des Stators (42) des Kardans verteilt sind.

11. Gyrodyne-Vorrichtung nach einem der vorhergehenden Ansprüche, **dadurch gekennzeichnet, dass** die Vibrationsdämpfungsmittel (70) wenigstens ein Teil (72), das auf dem Keil (30) befestigt ist, und wenigstens ein weiteres Teil (74) umfassen, das auf dem Stator (42) des Kardans befestigt ist.

12. Gyrodyne-Vorrichtung nach Anspruch 11, **dadurch gekennzeichnet, dass** wenigstens ein Teil (72), das auf dem Keil (30) befestigt ist, mit wenigstens einem anderen Teil (74) verbunden ist, das auf dem Stator (42) des Kardans unter Vermittlung wenigstens eines Elastomerblocks (76) befestigt ist.

13. Gyrodyne-Vorrichtung nach einem der vorhergehenden Ansprüche, **dadurch gekennzeichnet, dass** die Befestigungspunkte des Stators (42) des Kardans auf den Vibrationsdämpfungsmitteln (70) sich annähernd in einer selben Ebene befinden, und dass der Schwerpunkt des aus dem Rad (50), dem Radhalter (20), dem Stator (42) und den Mitteln zum Drehen des Rotors (40) bestehenden Aufbaus von der Ebene höchstens einige Zentimeter entfernt ist.

14. Gyrodyne-Vorrichtung nach einem der vorhergehenden Ansprüche, **dadurch gekennzeichnet, dass** eine ebene Basis (32) Befestigungsmittel (80) aufweist, vorzugsweise an einer Plattform eines Satelliten oder eines Raumflugkörpers.

15. Raumflugkörper, **dadurch gekennzeichnet, dass** wenigstens eine Gyrodyne-Vorrichtung nach einem der Ansprüche 1 bis 14 zum Regeln/Steuern seiner Haltung benutzt wird.

16. Raumflugkörper nach Anspruch 15, **dadurch gekennzeichnet, dass** wenigstens zwei Gyrodyne-Vorrichtungen nach einem der Ansprüche 1 bis 14 zum Regeln/Steuern seiner Haltung benutzt werden, und dass die Keile von wenigstens zwei Gyrodyne-Vorrichtungen aneinander durch Mittel befestigt sind.
